# EUROPÄISCHE PATENTSCHRIFT

(11) **EP 2 363 308 B1**
(45) Veröffentlichungstag und Bekanntmachung des Hinweises auf die Patenterteilung: **02.05.2018**
(21) Anmeldenummer: 11156353.2
(22) Anmeldetag: 01.03.2011
(51) Int. Cl.: B60G 9/00, B60G 11/28, B60G 11/46

(54) **Achslenker für eine luftgefederte Fahrzeugachse**
Axle guide for a pneumatic vehicle axle
Guide d'essieu pour un axe de véhicule à suspension pneumatique

(30) Priorität: 03.03.2010 DE 102010000620
(43) Veröffentlichungstag der Anmeldung: 07.09.2011
(73) Patentinhaber: BPW Bergische Achsen KG, 51674 Wiehl (DE)
(72) Erfinder: Schwarz, Michael, 51469, Bergisch Gladbach (DE); Siebel, Reiner, 53809, Ruppichteroth (DE); Borlinghaus, Thomas, 51709, Marienheide (DE); Gmeiner, Swen, 51709, Marienheide (DE); Kriegeskotte, Thomas, 51580, Reichshof (DE); Michels, Manfred, 51067 Köln (DE)
(74) Vertreter: Christophersen, Ulrich Rudolf

(56) Entgegenhaltungen:
- EP-A1- 1 632 370
- EP-B1- 0 830 959
- WO-A1-2009/014423
- WO-A1-2010/095924
- DE-B3-102006 032 383
- DE-C1- 4 224 965
- DE-T2- 60 012 394
- JP-A- 2001 287 527
- US-A- 4 415 179
- US-A1- 2002 135 225
- US-A1- 2006 163 834
- US-A1- 2006 220 283
- US-A1- 2007 145 704
- US-A1- 2009 194 964

## Beschreibung

Die Erfindung betrifft einen Achslenker für eine luftgefederte Fahrzeugachse, mit einem Achseinbindungsbereich, einem Schwenklager am einen Ende des Achslenkers sowie einem aus mindestens zwei Befestigungslöchern bestehenden Lochbild zur Befestigung unterschiedlicher Luftfedern und/oder einer Luftfeder in unterschiedlichen Positionen am anderen Ende des Achslenkers.

Bei luftgefederten Fahrzeugachsen ist die Luftfeder zumeist mit dem Achslenker in fester, unveränderlicher Position verbunden. Häufig sind die Teile auch miteinander verschweißt, wodurch eine nachträgliche Positionsänderung der Luftfeder in Bezug auf den Achslenker nicht möglich ist.

Aus der DE 42 24 965 C1 ist es bekannt, den Achslenker zur wahlweisen Befestigung unterschiedlich dimensionierter Luftfedern mit insgesamt drei Löchern gleichen Durchmessers zu versehen, die in Reihe, aber mit ungleichen Abständen angeordnet sind. Die Befestigung der jeweiligen Luftfeder erfolgt über zwei dieser drei Löcher.

Aus der DE 42 13 676 A1 ist es bekannt, eine aus einem Luftfederbalg und einem Tauchkolben bestehende Luftfeder auf einfache Weise in verschiedenen Positionen an einem Achslenker zu befestigen. Hierzu weist der Tauchkolben der Luftfeder eine nach unten offene Aufnahmeöffnung auf, in die ein Befestigungsteil von unten her einschiebbar ist. Dieses weist zur Seite hin einen Befestigungsansatz auf, über den das Befestigungsteil an dem Achslenker montiert werden kann. Auf diese Weise ist der Tauchkolben z. B. in zwei um 180° um die Längsachse gedrehten Positionen an dem Achslenker befestigbar, so dass sich ein unterschiedlicher seitlicher Versatz der Luftfeder in Bezug auf den Achslenker einstellen lässt.

Ein Achslenker mit den Merkmalen des Oberbegriffs ist aus der EP 0 830 959 B1 bekannt. Der Achslenker ist in seinem hinteren Bereich mit einer Vielzahl über Länge und Breite des Achslenkers verteilt angeordneter Löcher versehen. Die Position ein- und derselben Luftfeder ist hinsichtlich ihres Abstandes von dem chassisfesten Lagerpunkt des Achslenkers, und hinsichtlich ihres Abstandes von der Fahrzeuglängsmittelebene veränderbar. Auf diese Weise lässt sich der Achslenker mit Luftfedern verschiedener Hersteller und unterschiedlichen Anschlussmaßen kombinieren, was den Vorteil einer geringeren Produktvielfalt und damit reduzierter Lagerhaltung hat.

Ziel der Erfindung sind technische Maßnahmen, um ein- und denselben Achslenkerbautyp für unterschiedliche, z. B. kundenspezifische Einbausituationen geeignet zu machen, um so herstellerseitig zu einer verringerten Produktvielfalt und damit einer reduzierten Lagerhaltung zu kommen. Ziel ist ferner eine verwechslungssichere Luftfedermontage, indem eine für den Achslenker bestimmte Luftfeder zwar in vorgesehener Position oder vorgesehenen Positionen, nicht jedoch in anderen, durch den Achslenker ebenfalls bereitgestellten Positionen montierbar ist.

Erreicht wird dieses Ziel durch einen Achslenker mit den Merkmalen des Anspruchs 1. Dieser ist gekennzeichnet durch mindestens ein erstes Befestigungsloch, sowie mindestens ein hierzu einen unterschiedlichen Durchmesser aufweisendes, zweites Befestigungsloch.

An einem solcherart gestalteten Achslenker lassen sich ohne die Gefahr von Fehlmontagen Luftfedern mit gleichen oder unterschiedlichen Anschlussmaßen einsetzen, und selbst ein- und derselbe Achslenkerbautyp ist für unterschiedliche kundenspezifische Einbausituationen geeignet. Der Vorteil für einen Hersteller von Fahrwerken liegt in der verringerten Produktvielfalt, verbunden mit dem Vorteil einer reduzierten Lagerhaltung, da eine geringere Anzahl an Bautypen vorrätig gehalten werden muss.

Vorteilhafte Ausgestaltungen des erfindungsgemäßen Achslenkers sind in den Unteransprüchen angegeben.

Nachfolgend werden anhand der Zeichnungen besondere Ausgestaltungen der Erfindung näher erläutert. Auf der Zeichnung zeigen:
- Fig. 1: in einer vereinfachten Seitenansicht ein Achsaggregat eines luftgefederten Fahrzeuges einschließlich eines Achskörpers, eines Achslenkers und einer den Achslenker gegenüber dem Fahrzeugchassis abstützenden Luftfeder;
- Fig. 2: in vergrößerter Darstellung die Einzelheit II der Fig. 1;
- Fig. 3: einen Längsschnitt durch den hinteren Teil des Achslenkers, wobei die Luftfeder nicht dargestellt ist;
- Fig. 4: in einer Draufsicht eine erste Möglichkeit der Positionierung einer Luftfeder auf dem hinteren Teil des Achslenkers und
- Fig. 5: ebenfalls in einer Draufsicht eine zweite Möglichkeit einer Positionierung einer Luftfeder auf dem hinteren Teil des Achslenkers.

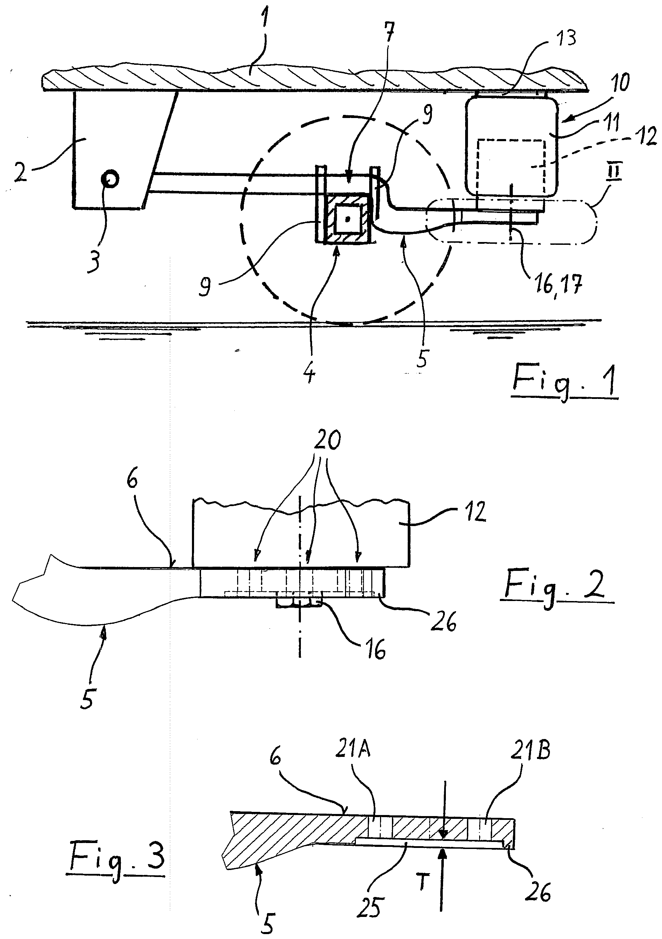

Die Fig. 1 zeigt in Seitenansicht ein Achsaggregat, wie es üblicherweise bei Schwerlastfahrzeugen und insbesondere Nutzfahrzeuganhängern mit nicht angetriebener Achse zum Einsatz kommt. Unter dem Chassis 1 des Fahrzeuges ist auf jeder Fahrzeugseite eine Stütze 2 mit einem Schwenkgelenk 3 für eine gelenkige Verbindung mit dem vorderen Ende jeweils eines Achslenkers 5 befestigt. Die Achse 4, an deren äußeren Enden die Fahrzeugräder gelagert sind, erstreckt sich quer zur Fahrtrichtung. Nahe ihrer beiden Enden ist die Achse 4 jeweils mit einem als Längslenker gestalteten Achslenker 5 verbunden. Hierzu weist der Achslenker 5 einen Achseinbindungsbereich 7 auf, in dem, z. B. mittels entsprechender Verbindungselemente 9, der Achslenker 5 mit dem Achskörper 4 verbunden ist. Der Achskörper der Achse 4 ist hier als Achsrohr mit rechteckigem Querschnitt gestaltet, ebenso kann der Achskörper z. B. einen runden Querschnitt aufweisen. Der Achslenker 5 ist als Lenkerfeder ausgebildet, und besteht aus einem verformbaren Federstahl.

An dem in Fahrtrichtung hinteren Ende ist auf der Oberseite 6 des Achslenkers 5 eine Luftfeder 10 befestigt, die sich andererseits von unten her gegen das Chassis 1 abstützt, und so über den Achslenker 5 die Fahrzeugachse federt. Die Luftfeder 10 setzt sich in üblicher Weise aus einem flexiblen, den Druckraum bildenden Rollbalg 11, einem auf der Oberseite 6 des Achslenkers 5 abgestützten Tauchkolben 12 sowie einem Deckel 13 als oberer Abschluss des Rollbalgvolumens zusammen. Der Aufbau einer solchen Luftfeder mit Tauchkolben ist z. B. aus der DE 197 10 849 A1 bekannt.

Gemäß Fig. 2 erfolgt die Befestigung des Tauchkolbens 12 der Luftfeder auf der Oberseite 6 des Achslenkers 5 mittels einer oder mehrerer durch Bohrungen des Achslenkers 5 hindurchführender Schrauben 16, 17. Die Schraube greift mit ihrem Gewinde in ein entsprechendes Gewinde des Tauchkolbens 12 ein, und sie stützt sich mit ihrem Schraubenkopf von unten her gegen den Achslenker 5 ab. Zur Hindurchführung der Schraube 16, 17 durch den Achslenker dient ein entsprechendes Befestigungsloch, wobei, wie im Folgenden im Einzelnen gezeigt wird, nicht nur ein einzelnes Befestigungsloch vorhanden ist, sondern eine Mehrzahl von Befestigungslöchern, die gemeinsam ein Lochbild 20 auf dem hinteren Längsabschnitt des Achslenkers 5 bilden. Auf diesem hinteren Längsabschnitts und damit im Bereich des Lochbildes 20 weist der Achslenker 5 ein größere Breite auf, als auf seiner übrigen Länge.

Bei dem hier beschriebenen Ausführungsbeispiel ist das Lochbild 20 rautenförmig und setzt sich aus insgesamt vier Befestigungslöchern 21A, 21B, 22A, 22B zusammen. Zwei Befestigungslöcher 21A, 21B befinden sich auf der Längsmittellinie M des Achslenkers 5. Sie weisen einen Lochabstand A1 zueinander auf. Beide Befestigungslöcher 21A, 21B sind als gleich große Bohrungen gestaltet mit einem Durchmesser D1, der z. B. 17 mm beträgt.

Zu dem Lochbild 20 gehören außerdem zwei weitere Befestigungslöcher 22A, 22B, die sich auf demselben Längsabschnitt des Achslenkers befinden, wobei sich dieser Längsabschnitt auf der Mitte des Abstands A1 zwischen den beiden anderen Befestigungslöchern 21A, 21B befindet. Die Befestigungslöcher 22A, 22B liegen jeweils auf unterschiedlichen Seiten in Bezug auf die Längsmittellinie M, und weisen daher zu dieser jeweils einen Versatz V auf, der z. B. jeweils 20 mm beträgt. Der Durchmesser D2 beider Befestigungslöcher 22A, 22B ist identisch, er ist aber unterschiedlich zu dem Durchmesser D1 der anderen Befestigungslöcher und beträgt z. B. 18,5 mm.

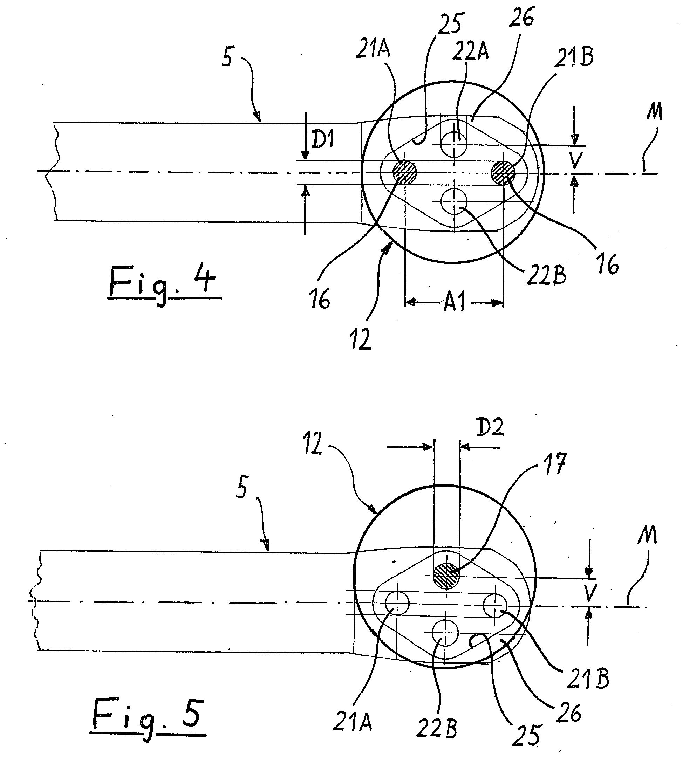

Fig. 4 zeigt eine erste Möglichkeit, eine Luftfeder mit ihrem Tauchkolben 12 auf dem Achslenker 5 zu befestigen. Die Befestigung erfolgt hierbei mittels zweier Schrauben 16, die durch die auf der Längsmittellinie M angeordneten Befestigungslöcher 21A, 21B hindurchgeführt sind. Dies führt zu einer symmetrischen Positionierung der Luftfeder in Bezug auf die Längsmittellinie M.

Die Fig. 5 zeigt demgegenüber eine andere mögliche Montageposition. Die Befestigung des Tauchkolbens 12 erfolgt hierbei mit lediglich einer Schraube 17, welche sich exakt auf der Mittelachse der eine runde Grundfläche aufweisenden Luftfeder befindet. Die Schraube 17 ist durch das mit seitlichem Versatz V angeordnete Befestigungsloch 22A hindurchgeführt, wodurch auch die Luftfeder einen Versatz V zur Längsmittellinie M des Achslenkers 5 aufweist. Alternativ ließe sich dieselbe oder auch eine anders gestaltete Luftfeder auch auf dem anderen seitlichen Befestigungsloch 22B montieren, wodurch ebenfalls ein Versatz der Luftfeder, jedoch zur anderen Seite hin, erzielt würde.

Da die Befestigung des Tauchkolbens und damit der Luftfeder bei der Variante nach Fig. 4 mit zwei Schrauben 16 erfolgt, bei der Variante nach Fig. 5 hingegen nur mit einer Schraube 17, ist bei der zweiten Variante die Verschraubung aus Festigkeitsgründen stärker dimensioniert. Dies hat zudem den Vorteil der Vermeidung einer Fehlmontage, da die jeweilige Luftfeder 10 zwar in ihrer vorgesehenen Position oder in vorgesehenen Positionen montierbar ist, nicht jedoch in anderen, durch den Achslenker 5 ebenfalls bereitgestellten, allerdings für andere Luftfedertypen bestimmten Positionen. Bei der Luftfeder mit mehr als einer Schraube verhindern die in dem Achslenker vorhandenen Lochabstände eine Fehlmontage an anderen, hinsichtlich des Schraubendurchmessers eigentlich ebenfalls passenden Löchern. Bei der Luftfeder mit nur einer Schraube verhindert der zu große Schraubendurchmesser eine Fehlmontage an für den Schraubendurchmesser zu kleinen Löchern. Verwechslungen sind somit in beiden Fällen ausgeschlossen.

Um eine entsprechende Schraube 17 mit größerem Durchmesser einsetzen zu können, ist der Durchmesser D2 der Befestigungslöcher 22A, 22B größer, als der Durchmesser D1 der Befestigungslöcher 21A, 21B.

Der Achslenker 5 ist an seiner Unterseite in dem Bereich um die Befestigungslöcher 21A, 21B, 22A, 22B herum mit einer Einsenkung 25 versehen, um die herum noch ein nach unten ragender Rand 26 verbleibt. Die Einsenkung 25 ist hier rautenförmig und von solcher Ausdehnung und Tiefe T, dass der Kopf der Schraube 16, 17 zum Teil in der Einsenkung 25 verschwindet. Die Einsenkung 25 lässt sich z.B. durch planes Fräsen herstellen. Auf diese Weise bildet der Boden der Einsenkung eine plane Fläche, an der sich der Schraubenkopf, auch ohne eine Unterlegscheibe, definiert und verkantungsfrei abstützen kann.

Je nach Nutzung der das Lochbild 20 ergebenden Befestigungslöcher 21A, 21B, 22A, 22B lassen sich daher unterschiedlich gestaltete Luftfedern und / oder mit unterschiedlichen Anschlussmaßen auf der Oberseite des Achslenkers befestigen, oder es lässt sich ein- und dieselbe Luftfeder in mehr als nur einer Position befestigen.

### Bezugszeichenliste

- 1: Chassis
- 2: Stütze
- 3: Schwenkgelenk
- 4: Achskörper
- 5: Achslenker
- 6: Oberseite des Achslenkers
- 7: Achseinbindungsbereich
- 9: Verbindungselement
- 10: Luftfeder
- 11: Rollbalg
- 12: Tauchkolben
- 13: Deckel
- 16: Schraube
- 17: Schraube
- 20: Lochbild
- 21A: Befestigungsloch
- 21B: Befestigungsloch
- 22A: Befestigungsloch
- 22B: Befestigungsloch
- 25: Einsenkung
- 26: Rand

- A1: Lochabstand
- M: Längsmittellinie
- V: Versatz

## Patentansprüche

1. Achslenker für eine luftgefederte Fahrzeugachse, mit einem Achseinbindungsbereich (7), einem Schwenklager (3) am einen Ende des Achslenkers (5) sowie einem aus mindestens zwei Befestigungslöchern bestehenden Lochbild (20) zur Befestigung unterschiedlicher Luftfedern und/oder einer Luftfeder in unterschiedlichen Positionen am anderen Ende des Achslenkers (5), **gekennzeichnet durch** mindestens ein erstes Befestigungsloch (21A, 21B), sowie mindestens ein hierzu einen unterschiedlichen Durchmesser aufweisendes, zweites Befestigungsloch (22A, 22B).

2. Achslenker nach Anspruch 1, **gekennzeichnet durch** ein erstes Paar Befestigungslöcher (21A, 21B) mit dem geringeren, und ein zweites Paar Befestigungslöcher (22A, 22B) mit einem im Vergleich größeren Durchmesser.

3. Achslenker nach Anspruch 1 oder 2, **dadurch gekennzeichnet, dass** zwei ein erstes Paar bildende Befestigungslöcher (21A, 21B) auf der Längsmittellinie (M) des Achslenkers (5) angeordnet sind.

4. Achslenker nach einem der vorangehenden Ansprüche, **dadurch gekennzeichnet, dass** zwei ein zweites Paar bildende Befestigungslöcher (22A, 22B) auf einer Linie quer zur Längsmittellinie (M) des Achslenkers (5) angeordnet sind.

5. Achslenker nach Anspruch 4, **dadurch gekennzeichnet, dass** die Befestigungslöcher (22A, 22B) denselben seitlichen Versatz (V) zur Längsmittellinie (M) aufweisen.

6. Achslenker nach einem der vorangehenden Ansprüche, **dadurch gekennzeichnet, dass** die Befestigungslöcher in ihrer Gesamtzahl ein rautenförmiges Lochbild (20) bilden.

7. Achslenker nach einem der vorangehenden Ansprüche, **dadurch gekennzeichnet, dass** sämtliche Befestigungslöcher (21A, 21B, 22A, 22B) an der Unterseite des Achslenkers (5) in einer Einsenkung (25) mit planem Boden münden, und dass die Einsenkung sämtliche Befestigungslöcher umgibt.

8. Achslenker nach einem der vorangehenden Ansprüche, **dadurch gekennzeichnet, dass** der Achslenker (5) im Bereich des Lochbildes (20) eine größere Breite aufweist, als auf seiner übrigen Länge.

## Claims

1. Axle guide for a pneumatically suspended vehicle axle, having an axle connection region (7), a pivot bearing (3) at one end of the axle guide (5) as well as a hole pattern (20) consisting of at least two fastening holes for fastening different pneumatic springs and/or one pneumatic spring in different positions at the other end of the axle guide (5), **characterised by** at least one first fastening hole (21A, 21B), as well as at least one second fastening hole (22A, 22B) having a different diameter.

2. Axle guide according to claim 1, **characterised by** a first pair of fastening holes (21A, 21B) having the smaller diameter, and a second pair of fastening holes (22A, 22B) having a diameter which is larger by comparison.

3. Axle guide according to claim 1 or 2, **characterised in that** two fastening holes (21A, 21B) forming a first pair are arranged on the longitudinal centre line (M) of the axle guide (5).

4. Axle guide according to one of the preceding claims, **characterised in that** two fastening holes (22A, 22B) forming a second pair are arranged on a line transversely with respect to the longitudinal centre line (M) of the axle guide (5).

5. Axle guide according to claim 4, **characterised in that** the fastening holes (22A, 22B) have the same lateral offset (V) relative to the longitudinal centre line (M).

6. Axle guide according to one of the preceding claims, **characterised in that** the fastening holes in their totality form a rhomboid hole pattern (20).

7. Axle guide according to one of the preceding claims, **characterised in that** all the fastening holes (21A, 21B, 22A, 22B) open on the underside of the axle guide (5) in a recess (25) having a planar base, and that the recess surrounds all the fastening holes.

8. Axle guide according to one of the preceding claims, **characterised in that** in the region of the hole pattern (20) the axle guide (5) has a greater width than on the rest of its length.

## Revendications

1. Guide d'essieu pour un essieu de véhicule amorti par air, avec une zone de liaison d'essieu (7), un palier pivotant (3) à une extrémité du guide d'essieu (5) ainsi qu'un gabarit de perçage (20) constitué d'au moins deux trous de fixation, pour la fixation de différents amortisseurs à air et/ou d'un amortisseur à air dans différentes positions à l'autre extrémité du guide d'essieu (5), **caractérisé par** au moins un premier trou de fixation (21A, 21B), ainsi qu'au moins un deuxième trou de fixation (22A, 22B) présentant un diamètre différent.

2. Guide d'essieu selon la revendication 1, **caractérisé par** une première paire de trous de fixation (21A, 21B) avec le diamètre le plus petit et une deuxième paire de trous de fixation (22A, 22B) avec un diamètre plus grand.

3. Guide d'essieu selon la revendication 1 ou 2, **caractérisé en ce que** deux trous de fixation (21A, 21B) formant une première paire sont disposés sur la ligne centrale longitudinale (M) du guide d'essieu (5).

4. Guide d'essieu selon l'une des revendications précédentes, **caractérisé en ce que** deux trous de fixation (22A, 22B) formant une deuxième paire sont disposés sur une ligne transversale par rapport à la ligne centrale longitudinale (M) du guide d'essieu (5).

5. Guide d'essieu selon la revendication 4, **caractérisé en ce que** les trous de fixation (22A, 22B) présentent le même décalage latéral (V) par rapport à la ligne centrale longitudinale (M).

6. Guide d'essieu selon l'une des revendications précédentes, **caractérisé en ce que** les trous de fixation forment dans leur ensemble un gabarit de perçage (20) en forme de losange.

7. Guide d'essieu selon l'une des revendications précédentes, **caractérisé en ce que** tous les trous de fixation (21A, 21B, 22A, 22B) débouchent, au niveau du côté inférieur du guide d'essieu (5), dans un enfoncement (25) avec un fond plat et **en ce que** l'enfoncement entoure tous les trous de fixation.

8. Guide d'essieu selon l'une des revendications précédentes, **caractérisé en ce que** le guide d'essieu (5) présente, au niveau du gabarit de perçage (20), une largeur plus grande que sur le reste de sa longueur.
